# EUROPÄISCHE PATENTSCHRIFT

(11) **EP 1 183 685 B1**
(45) Veröffentlichungstag und Bekanntmachung des Hinweises auf die Patenterteilung: **28.06.2006**
(21) Anmeldenummer: 01915073.9
(22) Anmeldetag: 01.03.2001
(51) Int. Cl.: G11B 17/04

(54) **CD-LAUFWERK**
CD DRIVE
COMMANDE CD

(30) Priorität: 29.03.2000 DE 10015694
(43) Veröffentlichungstag der Anmeldung: 06.03.2002
(73) Patentinhaber: Fujitsu Siemens Computers GmbH, 80807 München (DE)
(72) Erfinder: MERTES, Wilbert, 86343 Königsbrunn (DE)
(74) Vertreter: Epping - Hermann - Fischer
(86) Internationale Anmeldenummer: PCT/DE2001/000771
(87) Internationale Veröffentlichungsnummer: WO 2001/073782

(56) Entgegenhaltungen:
- US-A- 4 561 085
- US-A- 5 457 677
- US-A- 5 793 729
- PATENT ABSTRACTS OF JAPAN vol. 1997, no. 06, 30. Juni 1997 (1997-06-30) -& JP 09 055075 A (YAMAHA CORP), 25. Februar 1997 (1997-02-25)

## Beschreibung

Die Erfindung betrifft ein CD-Laufwerk mit einem Träger, auf welchen eine CD aufgelegt werden kann und welche in das Laufwerk hinein und heraus verfahrbar ist, wobei das Laufwerk bei eingefahrenem Träger über eine Blende verschlossen ist.

Derartige CD-Laufwerke sind üblich bei Computern oder Stereoanlagen und sind zum Beispiel aus der US 5,793,729 A bekannt.

Aus JP 09 055075 A ist ein CD-Wechsel-Laufwerk mit einziehbarem Drehteller bekannt, bei dem bei eingeschaltetem Laufwerk die sich auf dem Drehteller befindenden CDs auch bei eingezogenem Drehteller durch eine optische Einrichtung auch von außen eingesehen werden können.

Ebenfalls bekannt sind Wechselmagazine für CD-Wechsel-Laufwerke aus der US 5,457,677 A, bei denen der Beladezustand des Wechselmagazins von außen auch bei eingesetztem Magazin einsichtig ist.

Wenn jedoch der CD-Träger von den bei Computern oder Stereoanlagen üblichen einfachen CD-Laufwerken eingezogen ist, läßt sich bei den bisher bekannten Geräten nicht erkennen, ob eine CD eingelegt ist oder nicht.

Das CD-Laufwerk muß erst durch Knopfdruck geöffnet werden. Ist die Stereoanlage beziehungsweise der PC ausgeschaltet, so muß dieser hierzu erst eingeschaltet werden.

Der Erfindung liegt daher die Aufgabe zugrunde, das gattungsgemäße CD-Laufwerk dahingehend weiterzuentwickeln, daß auch bei ausgeschaltener Stereoanlage beziehungsweise ausgeschaltenem PC erkannt werden kann, ob eine CD eingelegt ist oder nicht.

Diese Aufgabe wird erfindungsgemäß dadurch gelöst, daß die Blende ein transparentes Medium aufweist, durch welches von außen gesehen werden kann, ob eine CD auf dem Träger liegt oder nicht.

Dieses transparente Medium kann zum Beispiel ein Fenster aus Glas oder Plexiglas oder auch eine Linse sein.

Diese Lösungen sind äußerst einfach und kostengünstig realisierbar. Dies ist insbesondere bei Computer-CD-Laufwerken von Bedeutung, da hier Laufwerke mit erhöhten Herstellkosten und somit einem erhöhten Verkaufspreis am Markt nicht durchsetzbar sind.

Für exklusivere Varianten ist die Blende zumindest teilweise oder insgesamt aus transparentem Kunststoff ausgebildet.

Die Erfindung ist sowohl bei einstückig mit dem Träger verbundenen Blenden sowie bei als Klappen ausgebildeten Blenden einsetzbar.

Nachfolgend wird anhand in den Figuren dargestellter Ausführungsbeispiele die Erfindung kurz erläutert.

In den Figuren zeigen:
- Figur 1: eine Schrägansicht eines PCs mit eingesetztem CD-Laufwerk,
- Figur 2: eine Schrägansicht eines CD-Trägers mit darauf angeordneter CD sowie frontseitiger Blende und
- Figur 3: eine seitliche Schnittansicht durch ein geschlossenes CD-Laufwerk mit klappenartig ausgebildeter Blende.

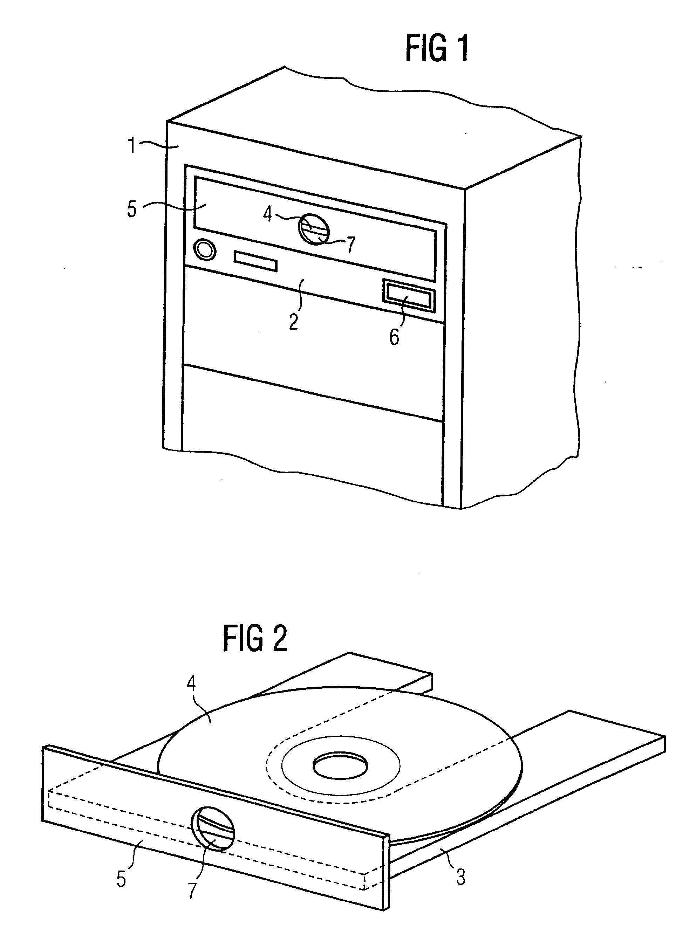

Figur 1 zeigt in schräger Ansicht von vorne teilweise das Gehäuse eines PCs 1, in welches ein CD-Laufwerk 2 eingesetzt ist.

Das CD-Laufwerk 2 besteht unter anderem, wie in Figur 2 dargestellt, aus einem Träger 3, auf welchem eine CD 4 aufgelegt ist und einer Blende 5, welche das CD-Laufwerk bei eingefahrenem Träger 3 von außen verschließt. Der Träger 3 kann über einen Knopf 6 bei eingeschaltenem PC aus dem CD-Laufwerk heraus beziehungsweise hinein verfahren werden.

Um auch bei geschlossenem CD-Laufwerk zu erkennen, ob eine CD 4 eingelegt ist oder nicht, weist die Blende 5 ein transparentes Medium 7 auf, durch welches von außen erkannt werden kann, ob eine CD 4 eingelegt ist oder nicht.

Das transparente Medium 7 kann zum Beispiel ein Fenster aus Glas oder Plexiglas oder auch eine Linse sein. Ebenso ist es auch möglich für die Blende 5 zumindest teilweise einen transparenten Kunststoff zu verwenden, so daß das transparente Medium 7 durch den Kuststof der Blende 5 gebildet ist.

Wie in Figur 2 dargestellt, ist gemäß einem ersten Ausführungsbeispiel die Blende 5 mit dem Träger 3 fest verbunden.

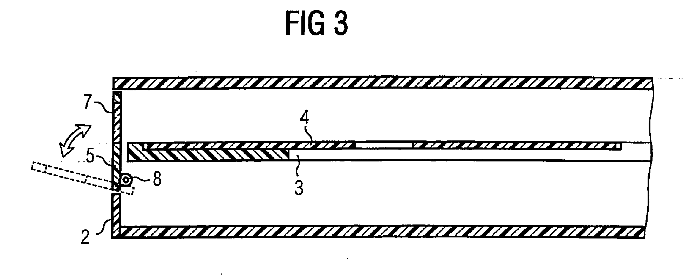

Figur 3 zeigt den Querschnitt durch eine alternative Ausführungsform eines CD-Laufwerkes, wobei hier die Blende 5 nicht mit dem Träger 3 verbunden ist, sondern über ein Scharnier 8 am CD-Laufwerk 2 festgelegt ist und somit klappenartig auf und zu bewegt werden kann.

## Patentansprüche

1. CD-Laufwerk mit einem Träger (3), auf welchen eine CD aufgelegt werden kann und welcher in das Laufwerk hinein und heraus verfahrbar ist, wobei das Laufwerk bei eingefahrenem Träger (3) über eine Blende (5) verschlossen ist,
**dadurch gekennzeichnet, daß**
die Blende (5) ein transparentes Medium (7) aufweist, durch welches von außen gesehen werden kann, ob eine CD (4) auf dem Träger liegt oder nicht.

2. CD-Laufwerk nach Anspruch 1,
**dadurch gekennzeichnet, daß**
das transparente Medium (7) ein Fenster aus Glas oder Plexiglas ist.

3. CD-Laufwerk nach Anspruch 1,
**dadurch gekennzeichnet, daß**
das transparente Medium (7) eine Linse ist.

4. CD-Laufwerk nach Anspruch 1,
**dadurch gekennzeichnet, daß**
das transparente Medium (7) der Kunststoff der Blende ist.

5. CD-Laufwerk nach einem der Ansprüche 1 bis 3,
**dadurch gekennzeichnet, daß**
das die Blende (5) einstückig mit dem Träger (3) ausgebildet ist.

6. CD-Laufwerk nach einem der Ansprüche 1 bis 3,
**dadurch gekennzeichnet, daß**
die Blende (5) als Klappe ausgebildet ist.

## Claims

1. CD drive having a tray (3) on which a CD can be placed and which can be inserted into and ejected from the drive, the drive being closed by a panel (5) when the tray (3) is inserted, **characterized in that** the panel (5) comprises a transparent medium (7) through which it is possible to see from the outside whether or not a CD (4) is placed on the tray.

2. CD drive according to Claim 1, **characterized in that** the transparent medium (7) is a window made of glass or acrylic glass.

3. CD drive according to Claim 1, **characterized in that** the transparent medium (7) is a lens.

4. CD drive according to Claim 1, **characterized in that** the transparent medium (7) is the plastic of the panel.

5. CD drive according to one of Claims 1 to 3, **characterized in that** the panel (5) is formed integrally with the tray (3).

6. CD drive according to one of Claims 1 to 3, **characterized in that** the panel (5) is designed as a flap.

## Revendications

1. Lecteur de CD, comprenant un support (3), sur lequel peut être posé un CD, et qui peut être rentré et sorti du lecteur, le lecteur étant fermé par un bandeau (5) lorsque le support (3) est rentré,
**caractérisé en ce que**
le bandeau (5) présente un moyen transparent (7) par lequel on peut voir de l'extérieur si un CD (4) est posé sur le support ou non.

2. Lecteur de CD selon la revendication 1,
**caractérisé en ce que**
le moyen transparent (7) est une fenêtre en verre ou en plexiglas.

3. Lecteur de CD selon la revendication 1,
**caractérisé en ce que**
le moyen transparent (7) est une lentille.

4. Lecteur de CD selon la revendication 1,
**caractérisé en ce que**
le moyen transparent (7) est constitué par le plastique du bandeau.

5. Lecteur de CD selon l'une quelconque des revendications 1 à 3,
**caractérisé en ce que**
le bandeau (5) est réalisé d'une seule pièce avec le support (3).

6. Lecteur de CD selon l'une quelconque des revendications 1 à 3,
**caractérisé en ce que**
le bandeau (5) est réalisé sous forme de capot.
